# DEMANDE DE BREVET EUROPEEN

(11) **EP 1 215 788 A2**
(43) Date de publication de la demande: **19.06.2002**
(21) Numéro de dépôt: 01204793.2
(22) Date de dépôt: 10.12.2001
(51) Int. Cl.: H02G 3/30

(54) **Collier pour la fixation rapide de câbles sur un chemin de câbles**

(30) Priorité: 11.12.2000 FR 0016346
(71) Demandeur: Dufix SaS, 63500 Issoire (FR)
(72) Inventeur: Dufour, Alain, 63500 Issoire (FR)
(74) Mandataire: Richebourg, Michel François

(57) **Abrégé**

Système de fixation de câbles dans un chemin de câbles à parois perforées, du type lien souple, qui consiste en un lien souple 12 de géométrie telle que ledit lien peut passer dans les perforations du chemin de câbles, et de longueur telle qu'il peut entourer les câbles entre deux perforations 5 , comportant à une de ses extrémités une tête 20 de géométrie telle qu'elle ne peut passer au travers des perforations 5 du chemin de câbles, et ledit lien comportant à son autre extrémité une seconde tête 30 dont au moins une surface comporte des moyens 40 de blocage capables de coopérer avec le bord 37 des perforations 5 du chemin de câbles, et dont la géométrie est adaptée pour que ladite seconde tête puisse passer dans lesdites perforations mais soit bloquée dans lesdites perforations par lesdits moyens, ceux ci étant tels qu'ils empêchent tout retour en arrière de la tête 30 après qu'elle ait été engagée dans une perforation.

Application à tous câbles, ou tubes et tuyaux souples.

## Description

### Secteur technique de l'invention :

La présente invention concerne le secteur technique des systèmes de fixation de câbles ou faisceaux de câbles sur un « chemin de câbles » au moyen de colliers et systèmes analogues.

L'invention s'applique aussi aux tuyaux et tubes souples ou analogues.

### Problème technique posé :

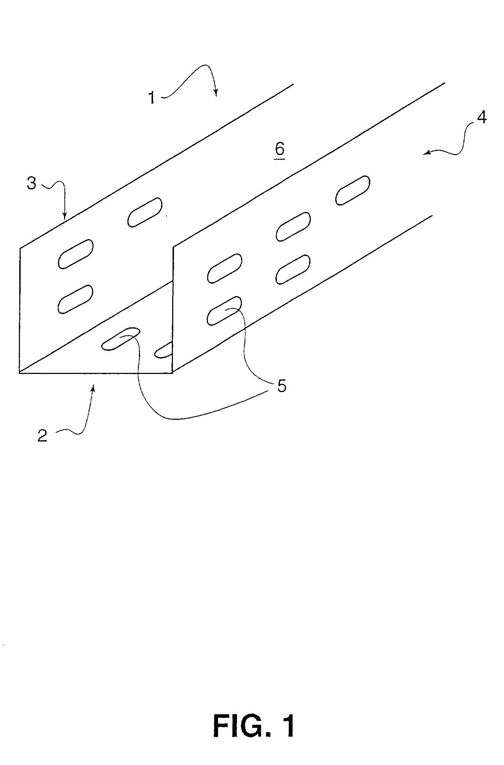

Un chemin de câbles, dont un exemple est représenté sur la figure 1 annexée, est un guide généralement métallique 1 en forme, généralement de U formé par trois parois perforées 2 (fond), 3 et 4, délimitant un volume 6 ouvert où l'on place des câbles ou faisceaux de câbles (ci après par simplicité « câbles »).

II est nécessaire de fixer ces câbles sur le chemin de câbles, dans le volume 6.

A cet effet, le guide comporte des séries généralement régulières de perforations 5, généralement de forme oblongue allongées horizontalement, dans lesquelles on peut faire passer des liens destinés à fixer les câbles.

L'un des problèmes posés réside dans l'accessibilité difficile du volume 6, lequel est généralement placé en hauteur pour diverses raisons techniques et de sécurité, ou afin de ne pas encombrer le mur à hauteur d'homme, et considérations analogues.

Le volume 6 s'ouvre donc en général vers le haut, et se trouve assez près du plafond du couloir ou de tout autre local contenant le chemin de câbles.

On conçoit donc qu'il est très difficile de poser et fixer facilement et correctement les câbles par un lien, de changer les câbles, de les fixer à nouveau etc....

L'acuité de ce problème, en apparence anodin, est confirmée par l'abondance de l'art antérieur existant sur ce sujet.

### Art antérieur :

On connaît de nombreux systèmes de type colliers métalliques et analogues, qui ne sont pas comparables à un lien souple tel que visé, comme on le verra ci-dessous, par l'invention. on citera par exemple le brevet GB 2 244 087, ou le brevet WO 94 04 861, ou FR 2 540 946, ou FR 2 756 902.

On connaît également des systèmes à lien flexibles comportant des crans ou entailles pour encliquetage, mais qui ne s'attachent absolument pas au problème posé par l'invention. On citera par exemple les brevets FR 2 773 855, EP 0 493 182, EP 0 845 626, JP 2000082883, JP 11205969, US 5,314,154, US 3, 966, 154, GB 2 338 351, EP 0 632 222, GB 2 221 246.

On connaît encore un lien flexible comportant une tête plus massive à une extrémité et une partie crantée à l'autre extrémité, WO 96 31720, ledit lien étant cependant de structure compliquée avec une partie métallique ancrée dans la tête.

On connaît encore un lien flexible comportant une tête massive à une extrémité, et qui s'enroule autour du câble avant de revenir vers le même orifice ou perforation que celui où est bloquée la tête. Ce dispositif ne comporte pas de moyens de fixation rapide et son utilisation par le dessous du guide n'est pas aisée.

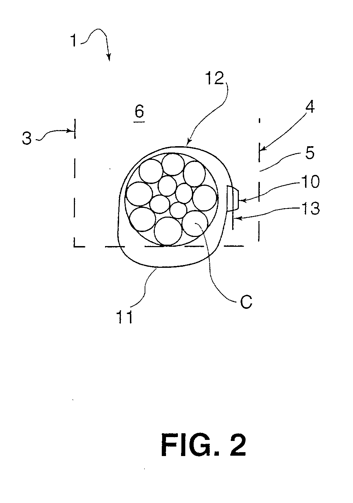

On connaît encore des liens souples commercialisés, tels que représentés sur la figure 2 annexée, ou un lien souple vient s'encliqueter dans une fente d'une tête 10. Ce système très simple, et apparemment très proche de l'invention, ne résout aucunement le problème de l'accessibilité puisqu'il oblige au contraire à opérer *dans* le guide le glissement de la patte 13 dans la fente de la tête 10.

On constate donc, à la lecture de cet abondant art antérieur, que de nombreux inventeurs ont cherché à résoudre le problème posé, que certains se sont approchés de la solution proposée dans la présente demande, mais ne sont pas parvenus, bien qu'étant apparemment proches de la solution, à résoudre l'ensemble des problèmes d'accessibilité et de facilité de fixation ; il existe donc encore à ce jour un besoin important et reconnu pour un lien souple à fixation rapide, même sur un guide difficile d'accès, la fixation étant assurée en toutes circonstance, les câbles étant serrés solidement et sans obligation pour le professionnel de procéder à des tâtonnements.

### Résumé de l'invention :

La présente invention conceme un système de fixation de câbles dans un chemin de câbles à parois perforées, du type lien souple, caractérisé en ce que
- il consiste en un lien souple 12 de section droite rectangulaire de faible épaisseur, de géométrie telle que ledit lien peut passer dans les perforations du chemin de câbles, et de longueur telle qu'il peut entourer les câbles entre deux perforations 5 du chemin de câbles 1;
- comportant à une de ses extrémités une tête 20 de géométrie telle qu'elle ne peut passer au travers des perforations 5 du chemin de câbles,
- et ledit lien comportant à son autre extrémité une seconde tête 30 dont au moins une surface comporte des moyens 40 de blocage capables de coopérer avec le bord 37 des perforations 5 du chemin de câbles, et dont la géométrie est adaptée pour que ladite seconde tête puisse passer dans lesdites perforations mais soit bloquée dans lesdites perforations par lesdits moyens, ceux ci étant tels qu'ils empêchent tout retour en arrière de la tête 30 après qu'elle ait été engagée dans une perforation.

### Description détaillée de l'invention :

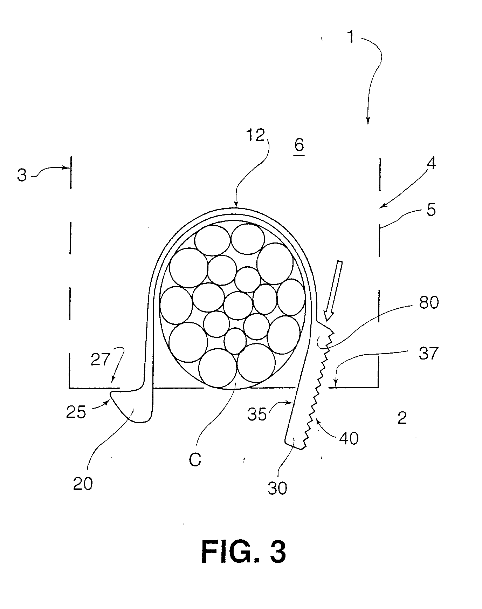

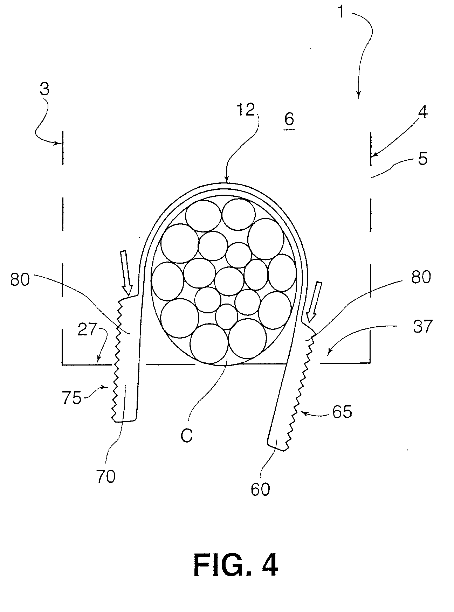

L'invention concerne donc un système tel que représenté sur les figures 3 et 4.

On voit que la tête 20 est bloquée, sans aucun passage possible, par sa partie 25 contre le bord 27 d'une perforation 5, tandis que la tête 30 est de dimensions telles qu'elle peut être engagée dans une perforation 5, grâce à sa géométrie et éventuellement à sa constitution en matériau souple.

Selon un mode de réalisation préféré, la tête 30 comporte une surface comportant des moyens de blocage 40, l'autre surface 35 étant lisse.

Selon un mode de réalisation moins préféré, les deux surfaces peuvent être munies de moyens de blocage 40.

Selon un mode de réalisation préféré, lesdits moyens de blocage consistent en des crans 40 capables de se bloquer dans l'épaisseur du bord 37 des perforations du chemin de câbles 1.

Selon encore un mode de réalisation préféré, lesdits moyens sont en matériau souple ou élastique comme un élastomère, un caoutchouc ou analogue.

Selon encore un mode de réalisation préféré, lesdits moyens sont formés par des crans formés sur au moins une surface de la tête 30, et sont capables de par leur géométrie de laisser la tête 30 pénétrer dans un sens dans une perforation 5, mais de se bloquer dans l'épaisseur du bord 37 de ladite perforation 5, lorsque l'on exerce une traction dans le sens inverse à celui de ladite pénétration.

La fixation du câble se fait de la manière suivante :
- on fait passer la tête 30 et le lien souple 12 dans une perforation du chemin de câbles (par le dessous dans l'exemple non limitatif représenté sur la figure 3) ;
- on entoure les câbles C par ledit lien souple 12 et on fait passer la tête 30, cette fois par le dessus du fond 2 dans l'exemple non limitatif représenté, dans une perforation 5 du chemin de câbles ;
- on positionne la tête 30 dans ladite perforation
- on applique une force sur le rebord 80 de ladite tête 30, de manière à engager les moyens de blocage 40 en position de blocage avec l'épaisseur du bord 37 de ladite perforation.

Ladite force (flèche) peut être appliquée de manière très pratique par le technicien, au moyen par exemple d'un simple tournevis, et cette opération, non plus que le positionnement du lien et des têtes, ne nécessite aucun geste de précision qui serait difficile compte tenu de l'accessibilité très réduite ; il suffit de placer le système par le dessous du chemin de câbles, ce qui est facile, de positionner sommairement le lien 12 et la tête 30, puis de bloquer l'ensemble en position correcte de fixation par un simple effort sur un outil banal comme un tournevis, cet effort ne nécessitant lui aussi qu'un positionnement approximatif : il suffit que le tournevis soit positionné sur le rebord 80, et ensuite la force peut être appliquée en aveugle.

On note que l'on obtient ainsi une fixation ferme des câbles, contrairement à une partie de l'art antérieur où la fixation ne peut être que « lâche ».

Selon un mode de réalisation préféré, le rebord 80 sera légèrement en « V » à la jonction de la tête et du lien souple, pour faciliter la prise du tournevis ou autre outil semblable.

Selon un mode de réalisation particulier, le système selon l'invention comporte deux têtes 60 et 70, une à chaque extrémité du lien souple 12, comme représenté sur la figure 4, chaque tête comportant des moyens de blocage 65 et 75, notamment un crantage comme décrit ci-dessus.

La fixation du câble est effectuée comme indiqué en relation avec l'exemple non limitatif de la figure 3, sauf en ce que l'on positionne sommairement les deux têtes et on applique deux forces sur chaque rebord 80 de chaque tête.

De manière moins préférée, le lien souple pourrait être de la même épaisseur que les têtes, mais sans avantage et avec l'inconvénient d'un coût matière supérieur.

Le lien souple et les têtes sont réalisés de manière préférée en matériau souple, comme un caoutchouc, élastomère, matière plastique comme un polyamide 10, et sont de préférence monobloc.

Cependant, on peut aussi envisager pour certaines applications des matériaux souples comme une bande métallique fine emboîtée et / ou ancrée dans les deux têtes qui, elles, sont de préférence en un matériau souple tel que décrit ci-dessus.

L'homme de métier saura envisager toutes les variantes et options de ce type, et saura adapter les dimensions des têtes, et la longueur du lien 12, aux perforations des chemins de câbles considérés, et au diamètre des câbles à fixer.

L'invention couvre donc également tous les modes de réalisation et toutes les applications qui seront directement accessibles à l'homme de métier à la lecture de la présente demande, de ses connaissances propres, et éventuellement d'essais simples de routine.

## Revendications

1. Système de fixation de câbles C dans un chemin de câbles 1 à parois perforées ( 2, 3, 4), du type lien souple, **caractérisé en ce que**
- il consiste en un lien souple 12 de section droite rectangulaire de faible épaisseur, de géométrie telle que ledit lien peut passer dans les perforations 5 du chemin de câbles, et de longueur telle qu'il peut entourer les câbles entre deux perforations 5 du chemin de câbles 1;
- comportant à une de ses extrémités une tête 20 de géométrie telle qu'elle ne peut passer au travers des perforations 5 du chemin de câbles,
- et ledit lien comportant à son autre extrémité une seconde tête 30 dont au moins une surface comporte des moyens 40 de blocage capables de coopérer avec le bord 37 des perforations 5 du chemin de câbles, et dont la géométrie est adaptée pour que ladite seconde tête puisse passer dans lesdites perforations mais soit bloquée dans lesdites perforations par lesdits moyens 40, ceux d étant tels qu'ils empêchent tout retour en arrière de la tête 30 après qu'elle ait été engagée dans une perforation.

2. Système selon la revendication 1**caractérisé en ce que** la tête 20 est bloquée, sans aucun passage possible, par sa partie 25 contre le bord 27 d'une perforation 5, tandis que la tête 30 est de dimensions telles qu'elle peut être engagée dans une perforation 5, grâce à sa géométrie et éventuellement à sa constitution en matériau souple.

3. Système selon la revendication 1 ou 2 **caractérisé en ce que** la tête 30 comporte une surface comportant des moyens de blocage 40, l'autre surface 35 étant lisse.

4. Système selon la revendication 1 ou 2 **caractérisé en ce que** les deux surfaces peuvent être munies de moyens de blocage 40.

5. Système selon l'une quelconque des revendications 1 à 4 **caractérisé en ce que** lesdits moyens de blocage consistent en des crans 40 capables de se bloquer dans l'épaisseur du bord 37 des perforations du chemin de câbles 1.

6. Système selon l'une quelconque des revendications 1 à 5 **caractérisé en ce que** lesdits moyens sont en matériau souple ou élastique comme un élastomère, uun caoutchouc, une matière plastique comme un polyamide 10 ou analogue.

7. Système selon l'une quelconque des revendications 1 à 6 **caractérisé en ce que** lesdits moyens sont formés par des crans formés sur au moins une surface de la tête 30, et sont capables de par leur géométrie de laisser la tête 30 pénétrer dans un sens dans une perforation 5, mais de se bloquer dans l'épaisseur du bord 37 de ladite perforation 5, lorsque l'on exerce une traction dans le sens inverse à celui de ladite pénétration.

8. Système selon l'une quelconque des revendications 1 à 7 **caractérisé en ce que** il comporte deux têtes 60 et 70, une à chaque extrémité du lien souple 12, chaque tête comportant des moyens de blocage 65 et 75, notamment un crantage.

9. Système selon l'une quelconque des revendications 1 à 8 **caractérisé en ce que** le lien souple et les têtes sont réalisés de manière préférée en matériau souple, comme un caoutchouc, élastomère, matière plastique comme un polyamide 10, et sont de préférence monobloc.

10. Système selon l'une quelconque des revendications 1 à 9 **caractérisé en ce que** le lien 12 est réalisé dans des matériaux souples comme une bande métallique fine emboîtée et/ou ancrée dans les deux têtes qui, elles, sont en un matériau souple selon la revendication 9.

11. Procédé de fixation de câbles sur un chemin de câbles 1 perforé, **caractérisé en ce que** on utilise un système de fixation selon l'une quelconque des revendications 1 à 10 et la fixation du câble se fait de la manière suivante :
- on fait passer la tête 30 et le lien souple 12 dans une perforation du chemin de câbles (par le dessous dans l'exemple non limitatif représenté sur la figure 3) ;
- on entoure les câbles C par ledit lien souple 12 et on fait passer la tête 30, cette fois par le dessus du fond 2 dans l'exemple non limitatif représenté, dans une perforation 5 du chemin de câbles ;
- on positionne la tête 30 dans ladite perforation
- on applique une force sur le rebord 80 de ladite tête 30, de manière à engager les moyens de blocage 40 en position de blocage avec l'épaisseur du bord 37 de ladite perforation.

12. Système selon l'une quelconque des revendications 1 à 10 **caractérisé en ce que en ce que** le rebord 80 est légèrement en « V » à la jonction de la tête et du lien souple, pour faciliter la prise du tournevis ou autre outil semblable.
